# EUROPEAN PATENT APPLICATION

(11) **EP 2 540 424 A2**
(43) Date of publication of application: **02.01.2013**
(21) Application number: 12173357.0
(22) Date of filing: 25.06.2012
(51) Int. Cl.: B23C 3/18, B23C 5/00, B23C 5/10, B23C 5/22

(54) **Spherical cutter and method for machining a curved slot**

(30) Priority: 30.06.2011 US 201113173008
(71) Applicant: General Electric Company, Schenectady, NY 12345 (US)
(72) Inventor: Burgess, Gregory Mark, Maineville, OH Ohio 45039 (US)
(74) Representative: Williams, Andrew Richard

(57) **Abstract**

A spherical cutter (34) includes a spherically shaped body (42) having open and closed ends (44, 46) defining a central cavity (54), multipoint cutting edges (71) disposed along a circular rim (58) at the open end (44), and the spherically shaped body (42) generally defined by a radius (R) and an origin (O). The cutting edges (71) may be provided on cutting inserts (60) removably attached to support teeth (62) circumferentially disposed along the rim (58). The spherical cutter (34) may be mounted to a rotatable spindle (32) of a multi-axis computer numerically controlled machine (31) with the radius (R) and the origin (O) located along a rotational axis (48) of the spindle (32). The machine (31) may be used for machining a cylindrical blank (12) to form a plurality of circumferentially spaced apart integral rotor blades (18) extending radially outwardly from a hub (14) by machining each of the slots (37) along a spherical surface (S) defined by the radius (R) and the origin (O).

## Description

### BACKGROUND OF THE INVENTION

### FIELD OF THE INVENTION

This invention relates to machining gas turbine engine blades that are integral with a disk (BLISKS) or integrally bladed rotors (IBR's) and, more particularly, to the apparatus and methods for cutting the blades.

### DESCRIPTION OF RELATED ART

Bladed disks (BLISKS) and bladed drums (BLUMS), both of which are considered integrally bladed rotors (IBRS) are being used more often for fan, compressor stages in aircraft gas turbine engines. IBRS have a disk or a hub from which a plurality of integral blades extend substantially radially outwardly. Manufacturing IBRS is a challenging task due to the complex geometry of airfoil surfaces.

Existing methods of manufacturing IBR airfoils include flank milling, point milling, and use of grinding wheels. In a flank milling process, the periphery of an end mill, typically a tapered ball-end mill, generates the desired airfoil surface geometry through one or a few passes of the cutter. In a point milling process, a grinder makes numerous (usually hundreds) of shallow passes until the desired airfoil surface geometry is generated. These passes may be in the direction of airflow, or in the radial direction. The tool used in a point milling process is usually a tapered end-mill style cutter, small enough such that the entire diameter of the tool can fit between the airfoils of the IBR. Cutting speed is limited due to the small diameter of the tool, which restricts production efficiency.

Another method of manufacturing IBR airfoils includes successively plunging a cup-shaped cutter into the rotor for generating circular slots between the airfoils. This method is limited to either roughing in complex geometry airfoils or completely machining very simple geometry airfoils.

Accordingly, there is need for a better, faster, and less expensive cutter and method for roughing in complex geometry airfoils and more fully machining the BLISK and IBR airfoils.

### SUMMARY OF THE INVENTION

A spherical cutter includes a spherically shaped body having an open end and a closed end defining a central cavity. Multipoint cutting edges are disposed along a circular rim at the open end of the body. The spherically shaped body is generally defined by a radius and an origin. The spherical cutter may also include a shank at the closed end of the spherical cutter.

An exemplary embodiment of the spherical cutter further includes a plurality of cutting inserts including the cutting edges and the cutting inserts removably attached to the spherically shaped body along the circular rim. A plurality of support teeth are circumferentially disposed along the rim and positioned between adjacent recesses extending axially into the body. The plurality of cutting inserts are removably mounted and supported on the plurality of support teeth respectively.

Each of the support teeth may include a circumferentially facing front face and a circumferentially facing back face. The front face is configured for positioning one of the cutting inserts and the inserts are secured against the front face such as by clamps disposed in the recesses and attached to the rim by screws.

The inserts may be conically shaped with aft ends mated to the teeth and a wider forward cutting end with a circular cutting edge.

A multi-axis computer numerically controlled machine may include the spherical cutter mounted to a rotatable spindle of the machine. The machine may be operably programmed for moving the spherical cutter during cutting along a spherical surface generally defined by the radius and the origin.

A method for machining a cylindrical workpiece or blank to machine a plurality of circumferentially spaced apart integral rotor blades extending radially outwardly from a hub may include a step of machining a deep curved slot with the spherical cutter. The step of machining may include machining each of the slots along a spherical surface defined by the radius and the origin.

The step of machining may further include machining the slots with the spherical cutter mounted to a rotatable spindle of a multi-axis computer numerically controlled machine, the radius and the origin located along a rotational axis of the spindle, and moving the spherical cutter during the machining along the spherical surface generally defined by the radius and the origin by continually positioning the spindle during machining.

### BRIEF DESCRIPTION OF THE DRAWINGS

The foregoing aspects and other features of the invention are explained in the following description, taken in connection with the accompanying drawings where:
FIG. 1 is a schematical perspective view illustration of an exemplary embodiment of a rotatable spherical machine tool for fabricating an exemplary gas turbine engine rotor blisk.
FIG. 2 is a schematical perspective view illustration of a ceramic cutting insert on a rim of the spherical machine tool illustrated in FIG. 1.
FIG. 3 is a diagrammatical perspective view illustration of the rotatable spherical machine tool illustrated in FIG. 1 and the sphere it is moved about during machining.
FIG. 4 is a diagrammatical perspective view illustration of the rotatable spherical machine tool beginning to make a cut in a blank used to make the BLISK illustrated in FIG. 1.
FIG. 5 is a diagrammatical perspective view illustration of the rotatable spherical machine tool fully inserted in the cut illustrated in FIG. 3.
FIG. 6 is a diagrammatical perspective view illustration of the rotatable spherical machine tool withdrawing from the cut illustrated in FIG. 4.

### DETAILED DESCRIPTION OF THE INVENTION

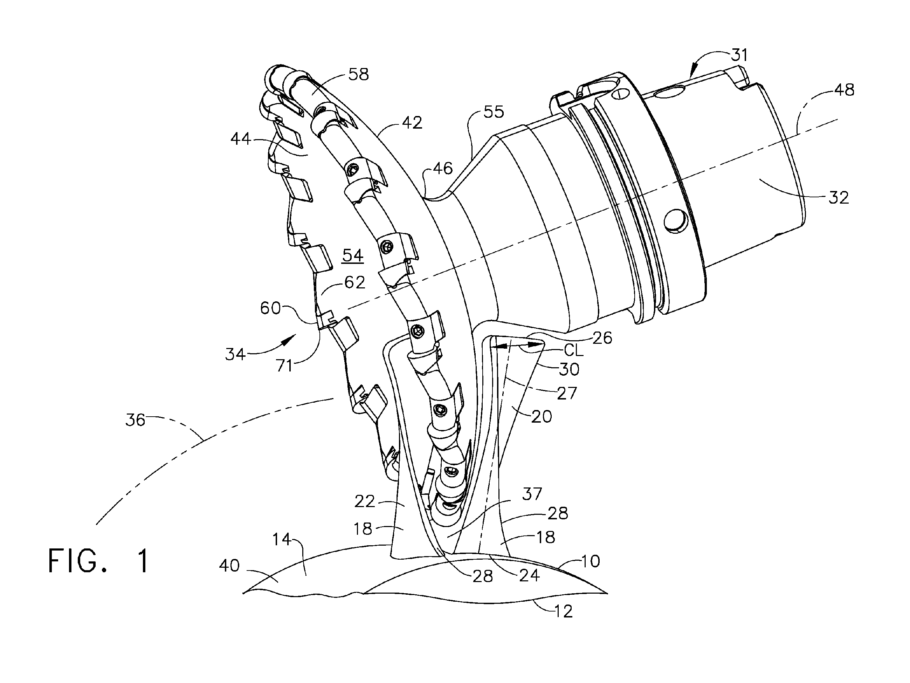

Illustrated in FIG. 1 is an exemplary embodiment of a spherical cutter 34 and a method for machining an exemplary gas turbine engine rotor blisk 10 using the spherical cutter 34. The blisk 10, representative of IBRs in general, is machined from a cylindrical workpiece or blank 12 illustrated herein as a solid annular disk having an annular central hub 14. The blisk 10 includes a plurality of circumferentially spaced apart integral rotor blades 18 extending radially outwardly from the hub 14, which integrally supports blades 18 thereon.

Each blade 18 includes a concave pressure side 20 and a convex suction side 22. The blades 18 extend radially from a root 24 to a tip 26 of each blade 18. The pressure and suction sides 20, 22 extend generally axially between a leading edge 28 and trailing edge 30 of each blade 18. In the exemplary embodiment, each blade 18 has a suitable airfoil configuration which typically twists about a radial blade or stacking axis 27 extending from the blade root 24 to the blade tip 26, with varying taper and/or change in chord length CL therebetween. In the exemplary embodiment, a camber of each blade 18 also typically varies from blade root 24 to blade tip 26, with the resulting airfoil having a 3-D contour or shape.

Blank 12 is machined using a known machine, such as, but not limited to, a multi-axis CNC (computer numerically controlled) machine, of the type suitable for milling, indicated at 31 in the FIGS. The machine 31 includes a spindle 32 to which the spherical cutter 34 is mounted. The spherical cutter 34 is a rotatable machine tool designed for cutting or milling. The blank 12 is fixtured relative to the CNC machine 31 and the spindle mounted spherical cutter 34. The spindle 32 and the spherical cutter 34 are operable to move with a plurality of degrees, or axes, of movement for following 3-D machining paths through blank 12 while the spindle 32 and the spherical cutter 34 are spinning about a rotational axis 48 of the spindle 32.

Referring to FIG. 1, generally, blank 12 is machined radially inwardly from a perimeter 36 thereof down to hub 14 to define a slot 37 or pocket between each blade 18 having a radially inner platform 40. The general operation, configuration, arrangement, and/or structure of machine 31 and blank 12 are known in the art and will therefore not be described in more detail herein.

The spherical cutter 34 includes a spherically shaped body 42 having an open end 44 and a closed end 46 defining a central cavity 54. The closed end 46 of the spherical cutter 34 is mounted or attached to the spindle 32 of the multi-axis milling machine 31 for rotation of the spherical cutter 34 about the rotational axis 48. The embodiment of the spherical cutter 34 illustrated herein includes a shank 55 at the closed end 46 of the spherical cutter 34 used to mount or attach the spherical cutter 34 to the spindle 32.

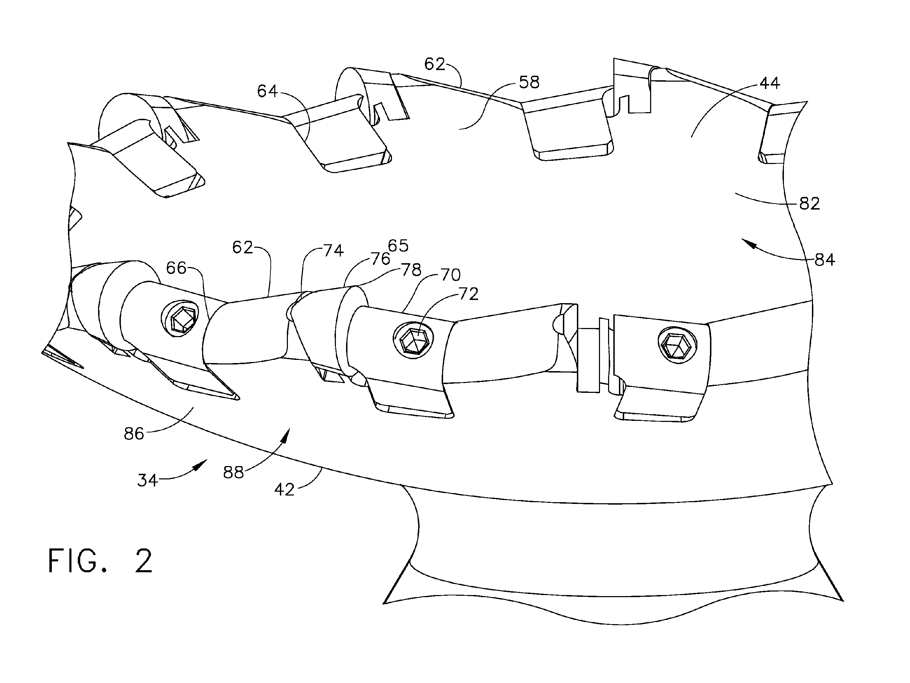

Referring to FIG. 2, multipoint cutting edges 71 are disposed along a circular rim 58 at the open end 44 of the body 42. The multipoint cutting edges 71 of spherical cutter 34 illustrated herein are provided by cutting inserts 60. A plurality of the cutting inserts 60 (illustrated in more detail in FIG. 2) are removably attached to the spherically shaped body 42 along the circular rim 58 at the open end 44 of the body 42. The inserts 60 are mounted and supported on a plurality of support teeth 62 circumferentially disposed along the rim 58 positioned between adjacent recesses 64 extending axially into the body 42. The support teeth 62 are configured to mount and support the inserts 60 at the rim 58.

Each tooth 62 has a circumferentially facing front face 65 and a circumferentially facing back face 66 around the rim 58. The front face 65 is configured for positioning one of the cutting inserts 60. The inserts 60 are secured against the front face 65 by clamps 70 disposed in the recesses 64 and attached to the rim by screws 72. The inserts 60 illustrated herein are conically shaped with an aft end 74 mated to the tooth 62 and a wider forward cutting end 76 with a circular cutting edge 78. The clamp 70 presses against the forward cutting end 76. Other types and shapes of inserts may be used.

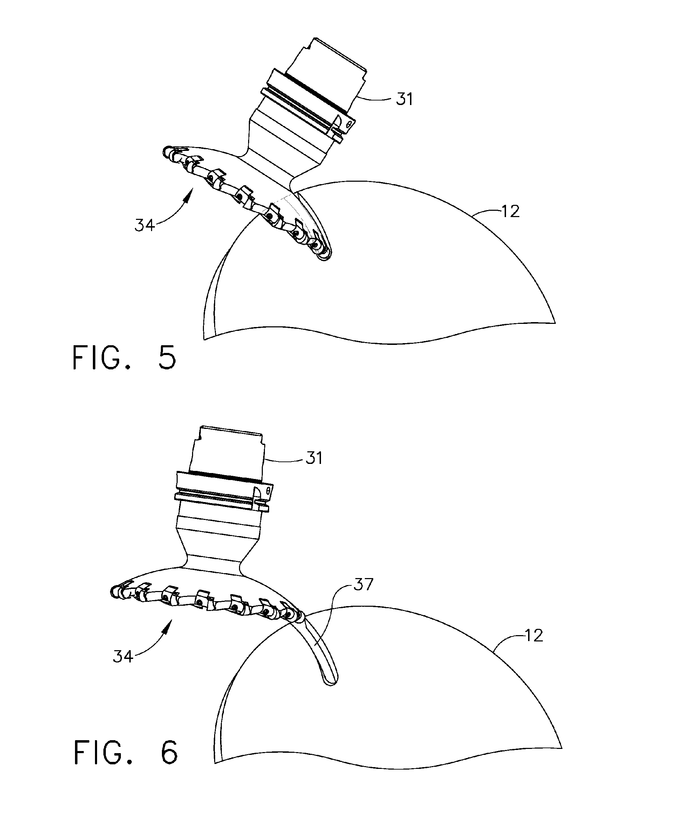

The cutting edges 78 may be of a replaceable carbide insert style or a carbide brazed-tip style. An inside 82 of the spherical cutter 34 has a concave shape 84 and the outside 86 has a convex shape 88. This enables a simple NC programming technique to generate and cut a deep curved slot 37 (illustrated in FIG. 6) without interference between the cutting tool (the cutter 34) and the part (the blank 12) being machined. The spherical cutter 34 may have a large diameter rim 58 at the open end 44 of the spherical body 42. For illustrative purposes, a large diameter may be 4 inches or larger. The spherical cutter 34 allows the use of exotic materials such as ceramics and cermets for the inserts which dramatically increases the metal removal rate during machining. The invention also simplifies the application of the tool.

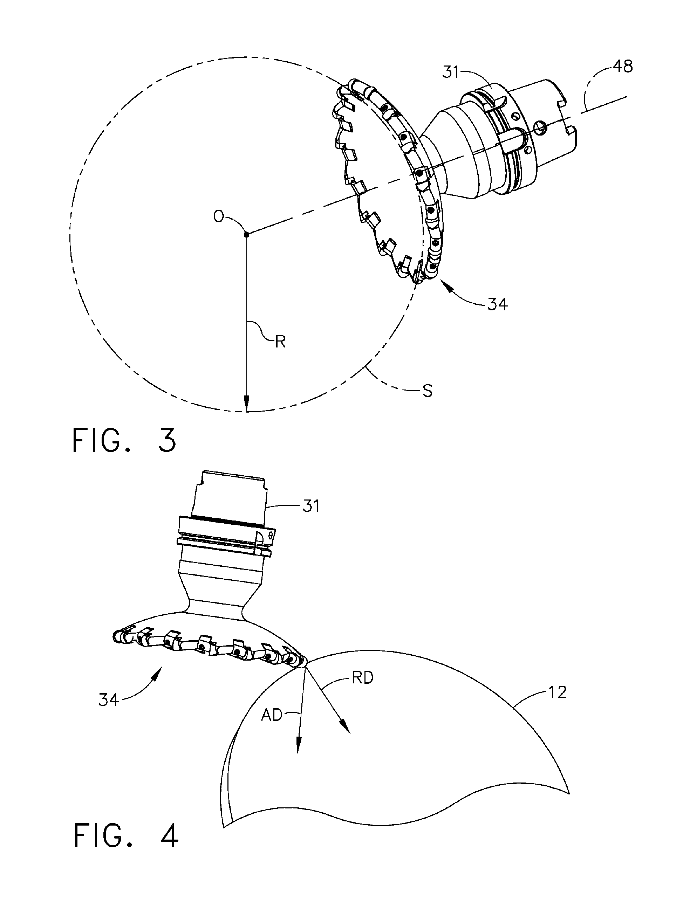

Referring to FIGS. 3-6, cutter 34 and its inserts 60 are capable to cut an axial direction AD for plunging (axial feed) and in a radial direction RD for the radial feed. The spherical shape of the spherically shaped body 42 allows the spherical cutter 34 to be plunged into blank 12 in axial and radial directions along a spherical surface S. The spherical surface S is defined by a radius R having an origin O. The spherically shaped body 42 is also generally defined by the same radius R and origin O. Each of the slots 37 are machined along a single spherical surface S having a single radius R and single origin O. The machine 31 is always operated and controlled to maintain the radius R and the origin O of along the rotational axis 48 of the spindle 32 while the spindle 32 is spinning about the rotational axis 48 and the spherical cutter 34 is being plunged into the blank 12 during machining of the slots 37 in the blank 12. Maintaining the radius R and the origin O of the spherical cutter 34 along the rotational axis 48 of the spindle 32 is accomplished by continually positioning the spindle 32 during machining.

Machining of each of the slots 37 along a single spherical surface S results in a curved slot 37 at the end of the plunge as illustrated in FIG. 5. FIG. 6 illustrates withdrawal of the spherical cutter 34 by continuing to spin the spindle and the spherical cutter 34 while moving the spherical cutter 34 along the spherical surface S when withdrawing the cutter from the curved slot 37.

While there have been described herein what are considered to be preferred and exemplary embodiments of the present invention, other modifications of the invention shall be apparent to those skilled in the art from the teachings herein and, it is therefore, desired to be secured in the appended claims all such modifications as fall within the scope of the invention.

Various Aspect and embodiments of the invention are indicated in the following clauses:
1. A spherical cutter comprising:
   a spherically shaped body having an open end and a closed end defining a central cavity,
   multipoint cutting edges disposed along a circular rim at the open end of the body, and
   the spherically shaped body generally defined by a radius and an origin.
2. The spherical cutter as claimed in Clause 1, further comprising a plurality of cutting inserts including the cutting edges and the cutting inserts removably attached to the spherically shaped body along the circular rim.
3. The spherical cutter as claimed in Clause 2, further comprising:
   a plurality of support teeth circumferentially disposed along the rim,
   the plurality of support teeth positioned between adjacent recesses extending axially into the body, and
   the plurality of cutting inserts removably mounted and supported on the plurality of support teeth respectively.
4. The spherical cutter as claimed in Clause 3, further comprising:
   each of the support teeth including a circumferentially facing front face and a circumferentially facing back face,
   the front face configured for positioning one of the cutting inserts, and
   the inserts secured against the front face.
5. The spherical cutter as claimed in Clause 4, further comprising the inserts secured against the front face by clamps disposed in the recesses and the clamps attached to the rim by screws.
6. The spherical cutter as claimed in Clause 5, further comprising the inserts being conically shaped, having aft ends mated to the teeth and a wider forward cutting end with a circular cutting edge.
7. The spherical cutter as claimed in Clause 1, further comprising a shank at the closed end of the spherical cutter.
8. The spherical cutter as claimed in Clause 7, further comprising:
   a plurality of cutting inserts including the cutting edges and the cutting inserts removably attached to the spherically shaped body along the circular rim,
   a plurality of support teeth circumferentially disposed along the rim,
   the plurality of support teeth positioned between adjacent recesses extending axially into the body, and
   the plurality of cutting inserts removably mounted and supported on the plurality of support teeth respectively.
9. The spherical cutter as claimed in Clause 8, further comprising:
   each of the support teeth including a circumferentially facing front face and a circumferentially facing back face,
   the front face configured for positioning one of the cutting inserts, and
   the inserts secured against the front face by clamps disposed in the recesses and the clamps attached to the rim by screws.
10. A multi-axis computer numerically controlled machine comprising:
   a spherical cutter mounted to a rotatable spindle of the machine,
   the spherical cutter including a spherically shaped body having an open end and a closed end defining a central cavity,
   multipoint cutting edges disposed along a circular rim at the open end of the body,
      and
   the spherically shaped body generally defined by a radius and an origin located along a rotational axis of the spindle.
11. The machine as claimed in Clause 10, further comprising the machine operably programmed for moving the spherical cutter during cutting along a spherical surface generally defined by the radius and the origin.
12. The machine as claimed in Clause 11, further comprising a plurality of cutting inserts including the cutting edges and the cutting inserts removably attached to the spherically shaped body along the circular rim.
13. The machine as claimed in Clause 12, further comprising:
   a plurality of support teeth circumferentially disposed along the rim,
   the plurality of support teeth positioned between adjacent recesses extending axially into the body, and
   the plurality of cutting inserts removably mounted and supported on the plurality of support teeth respectively.
14. The machine as claimed in Clause 13, further comprising:
   each of the support teeth including a circumferentially facing front face and a circumferentially facing back face,
   the front face configured for positioning one of the cutting inserts, and
   the inserts secured against the front face by clamps disposed in the recesses and the clamps attached to the rim by screws.
15. The machine as claimed in Clause 14, further comprising the inserts being conically shaped, having aft ends mated to the teeth and a wider forward cutting end with a circular cutting edge.
16. The machine as claimed in Clause 11, further comprising a shank at the closed end of the spherical cutter.
17. The machine as claimed in Clause 16, further comprising:
   a plurality of cutting inserts including the cutting edges and the cutting inserts removably attached to the spherically shaped body along the circular rim,
   a plurality of support teeth circumferentially disposed along the rim,
   the plurality of support teeth positioned between adjacent recesses extending axially into the body, and
   the plurality of cutting inserts removably mounted and supported on the plurality of support teeth respectively.
18. A method for machining a cylindrical workpiece or blank to machine a plurality of circumferentially spaced apart integral rotor blades extending radially outwardly from a hub, the method comprising:
   a step of machining a deep curved slot with a spherical cutter,
   the spherical cutter including a spherically shaped body having an open end and a closed end defining a central cavity,
   multipoint cutting edges disposed along a circular rim at the open end of the body,
      and
   the spherically shaped body generally defined by a radius and an origin.
19. The method as claimed in clause 18 wherein the step of machining includes machining each of the slots along a spherical surface defined by the radius and the origin.
20. The method as claimed in clause 19 wherein the step of machining includes:
   machining the slots with the spherical cutter mounted to a rotatable spindle of a multi-axis computer numerically controlled machine,
   the radius and the origin located along a rotational axis of the spindle, and
   moving the spherical cutter during the machining along the spherical surface generally defined by the radius and the origin by continually positioning the spindle during machining.

## Claims

1. A spherical cutter (34) comprising:
a spherically shaped body (42) having an open end (44) and a closed end (46) defining a central cavity (54),
multipoint cutting edges (71) disposed along a circular rim (58) at the open end (44) of the body (42), and
the spherically shaped body (42) generally defined by a radius (R) and an origin (O).

2. The spherical cutter (34) as claimed in Claim 1, further comprising a plurality of cutting inserts (60) including the cutting edges (71) and the cutting inserts (60) removably attached to the spherically shaped body (42) along the circular rim (58).

3. The spherical cutter (34) as claimed in Claim 2, further comprising:
a plurality of support teeth (62) circumferentially disposed along the rim (58),
the plurality of support teeth (62) positioned between adjacent recesses (64) extending axially into the body (42), and
the plurality of cutting inserts (60) removably mounted and supported on the plurality of support teeth (62) respectively.

4. The spherical cutter (34) as claimed in Claim 3, further comprising:
each of the support teeth (62) including a circumferentially facing front face (65) and a circumferentially facing back face (66),
the front face (65) configured for positioning one of the cutting inserts (60), and
the inserts (60) secured against the front face (65).

5. The spherical cutter (34) as claimed in Claim 4, further comprising the inserts (60) secured against the front face (65) by clamps (70) disposed in the recesses (64) and the clamps (70) attached to the rim (58) by screws (72).

6. The spherical cutter (34) as claimed in any of Claims 3 to 5, further comprising the inserts (60) being conically shaped, having aft ends (74) mated to the teeth (62) and a wider forward cutting end (76) with a circular cutting edge (78).

7. The spherical cutter (34) as claimed in any preceding Claim, further comprising a shank (55) at the closed end (46) of the spherical cutter (34).

8. A multi-axis computer numerically controlled machine (31) comprising:
a spherical cutter (34) according to any of the preceding claims, the spherical cutter (34) mounted to a rotatable spindle (32) of the machine (31), wherein the origin (O) is located along a rotational axis (48) of the spindle (32).

9. The machine (31) as claimed in Claim 8, further comprising the machine (31) operably programmed for moving the spherical cutter (34) during cutting along a spherical surface (S) generally defined by the radius (R) and the origin (O).

10. A method for machining a cylindrical workpiece or blank (12) to machine a plurality of circumferentially spaced apart integral rotor blades (18) extending radially outwardly from a hub (14), the method comprising:
a step of machining a deep curved slot (37) with a spherical cutter (34),
the spherical cutter (34) including a spherically shaped body (42) having an open end (44) and a closed end (46) defining a central cavity (54),
multipoint cutting edges (71) disposed along a circular rim (58) at the open end (44) of the body (42), and
the spherically shaped body (42) generally defined by a radius (R) and an origin (O).

11. The method as claimed in claim 10 wherein the step of machining includes:
machining each of the slots (37) with the spherical cutter (34) mounted to a rotatable spindle (32) of a multi-axis computer numerically controlled machine (31),
the radius (R) and the origin (O) located along a rotational axis (48) of the spindle (32), and
moving the spherical cutter (34) during the machining along a spherical surface (S) generally defined by the radius (R) and the origin (O) by continually positioning the spindle (32) during machining.
